**Europäisches Patentamt**

**European Patent Office**

**Office européen des brevets**

(19)

(11) Veröffentlichungsnummer: **0 341 388 B1**

## EUROPÄISCHE PATENTSCHRIFT

(12)

(45) Veröffentlichungstag der Patentschrift :
24.07.91 Patentblatt 91/30

(51) Int. Cl.⁵ : **B60S 3/04**

(21) Anmeldenummer : **89103996.8**

(22) Anmeldetag : **07.03.89**

(54) Vorrichtung zum Reinigen der Scheiben von Automobil-Neukarossen.

(30) Priorität : **13.05.88 DE 3816487**

(43) Veröffentlichungstag der Anmeldung :
**15.11.89 Patentblatt 89/46**

(45) Bekanntmachung des Hinweises auf die
Patenterteilung :
**24.07.91 Patentblatt 91/30**

(84) Benannte Vertragsstaaten :
**DE**

(56) Entgegenhaltungen :
EP-A- 0 114 424
US-A- 3 037 224
US-A- 3 608 121
US-A- 3 750 213
PATENT ABSTRACTS OF JAPAN vol. 7, no.
237 (M-250)(1382) 21 Oktober 1983, & JP-A-58
126238 (TOUKIYOU TATSUNO K.K) 27 Juli
1983,

(56) Entgegenhaltungen :
PATENT ABSTRACTS OF JAPAN vol. 10, no.
92 (M-468)(2149) 09 April 1986, & JP-A-60
229836 (SUZUKI GIKEN KOGYO K.K) 15 November 1985,

(73) Patentinhaber : **Behr Industrieanlagen GmbH
& Co.
Rosenstrasse 39
W-7120 Bietigheim-Bissingen (DE)**

(72) Erfinder : **Esslinger, Stefan
Tulpenweg 1
W-7121 Pleidelsheim (DE)**
Erfinder : **Sigmund, Volker
Roseggerweg 14
W-7141 Möglingen (DE)**
Erfinder : **Dörr, Michael
Heckenweg 4
W-7039 Well im Schönbuch (DE)**

(74) Vertreter : **Münzhuber, Robert, Dipl.-Phys. et al
Patentanwalt Rumfordstrasse 10
W-8000 München 5 (DE)**

EP 0 341 388 B1

## Beschreibung

Die Erfindung betrifft eine Vorrichtung zum automatisierbaren Reinigen der Scheiben Automobil-Neukarossen, die für den temporären Transportschutz auf einem Fließband vorzugsweise elektrostatisch mit einem Außenkonservierungsmittel, insbesondere einem wäßrigen Konservierungswachs, beschichtet worden sind.

Automobilkarossen werden vom Hersteller mit einer äußeren Konservierungsschicht versehen, die dazu dient, die Karosse auf ihrem Transport vom Hersteller zum Händler zu schützen. Als Konservierungsmittel dient dabei Wachs, das in verflüssigtem Zustand mittels einer elektrostatischen Zerstäubervorrichtung, meist einem Hochrotationszerstäuber, auf die Karosse aufgebracht und vom Händler mittels Heißdampf wieder entfernt wird. Ein Problem besteht nun darin, daß beim elektrostatischen Aufbringen des Konservierungsmittels nicht nur die zu schützenden Blechteile, sondern auch die Scheiben, also die Front-Seiten-Heckscheiben, beschichtet werden, so daß die Scheiben nach diesem Vorgang undurchsichtig sind. Für die Überführung der fertiggestellten Fahrzeuge vom Fließband zum Abstellplatz oder zum Verladebahnhof muß jedoch für die Fahrer die erforderliche Sicht gewährleistet werden. Aus diesem Grund müssen die Fahrzeugscheiben nach dem Konservierungsvorgang gereinigt werden, was im allgemeinen manuell erfolgt, in manchen Fällen auch mechanisch mittels Bürsten- oder Gummiwalzen. Aus Gründen des Emissionsschutzes ist man nun in der letzten Zeit immer mehr von der Verwendung organischer Lösungsmittel als Wachslöser abgegangen und auf die Verwendung sogenannter wäßriger Wachslösungen übergegangen. Dabei hat sich jedoch gezeigt, daß die sich dabei auf den Scheiben bildende Wachsschicht sehr fest am Glas haftet und beim Wegwischen zum Verschmieren neigt, es somit beträchtliche Schwierigkeiten bereitet, die Wachsschicht wieder von den Glasscheiben zu entfernen, sei es manuell oder mittels der erwähnten Bürsten- oder Gummiwalzen.

Aufgabe der vorliegenden Erfindung ist es deshalb, eine Vorrichtung zu schaffen, mit deren Hilfe es gelingt, auf wirtschaftliche, automatisierbare und voll in den Fertigungsablauf integrierbare Weise die Karosseriescheiben von der Außenkonservierungsschicht soweit zu befreien, daß die Fahrzeuge gefahrlos rangiert werden können. Die Lösung dieser Aufgabe ergibt sich aus den kennzeichnenden Merkmalen des Anspruches 1.

Auf der Zeichnung sind Ausführungsformen der erfindungsgemäßen Vorrichtung beispielsweise dargestellt. Es zeigen :

Fig. 1 in Seitenansicht, teilweise geschnitten, eine erste Ausführungsform der Erfindung,

Fig. 2 in Seitenansicht, teilweise geschnitten, eine zweite Ausführungsform der Erfindung, und zwar in Ausgangsposition, und

Fig. 3 eine Seitenansicht, teilweise geschnitten, der Ausführungsform von Fig. 2, und zwar in Arbeitsposition.

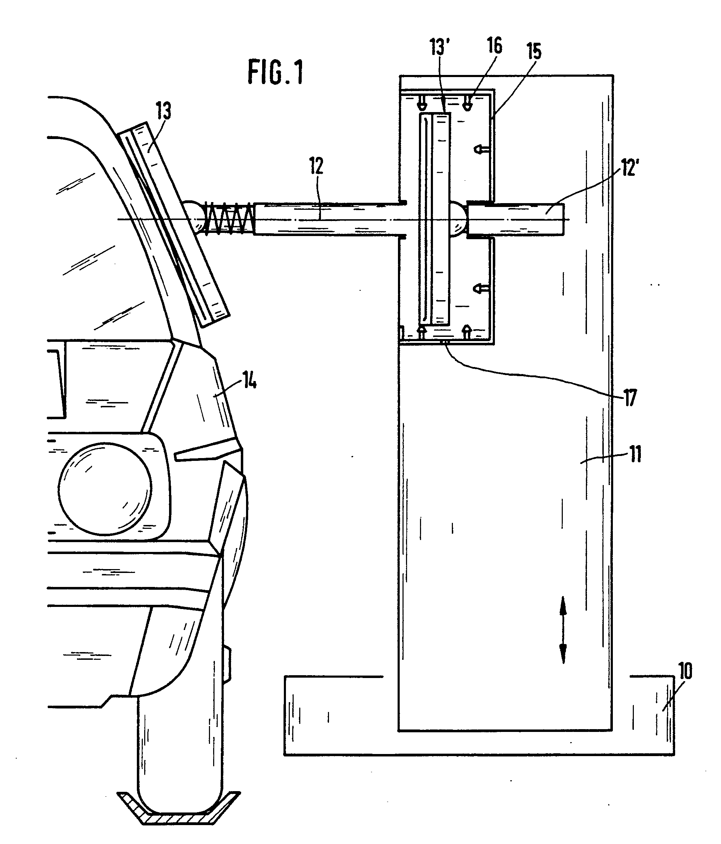

Die Vorrichtung gemäß Fig. 1 weist ein auf einem Grundrahmen 10 gelagertes Gehäuse 11 in Form einer aufrechtstehende Säule auf, die auf dem Grundrahmen 10 höhenverstellbar und gegebenenfalls auch seitenverschieblich ist. Am Gehäuse 11 ist ein horizontaler Roboterarm 12 gelagert, an dessen freiem Ende eine Wischerleiste 13 angelenkt ist. Der Roboterarm 12 ist als Teleskoparm ausgebildet und außerdem in der Horizontalen verfahrbar, und zwar zwischen einer ausgefahrenen Position, in welcher die Wischerleiste 13 an der zu reinigenden Scheibe einer bei 14 angedeuteten Automobilkarosse anliegt, und einer eingefahrenen Position, in welcher die in dieser Position mit 13' bezeichnete Wischerleiste sich innerhalb eines Waschkastens 15 befindet, der im bzw. am Gehäuse 11 befestigt ist. Der Waschkasten 15 hat eine Höhe, welche diejenigen der vertikal stehenden Wischerleiste 13' übertrifft und ist an seiner Innenseite mit einer Vielzahl von Spritzdüsen 16 versehen, die an eine nicht gezeichnete Waschflüssigkeitszuführleitung angeschlossen sind. An dem etwas hochgezogenen Boden des Waschkastens 15 befindet sich eine Auslaßöffnung 17, die in eine ebenfalls nicht dargestellte Ablaufleitung mündet.

Die Vorrichtung von Fig. 1 arbeitet folgendermaßen. Im Ruhezustand ist der Roboterarm in das Gehäuse 11 zurückgefahren und in sich zusammengeschoben ; in dieser Position ist der Roboterarm auf der Zeichnung mit 12' bezeichnet. Damit befindet sich die Wischerleiste innerhalb des Waschkastens 15, in welcher Position sie, wie bereits erwähnt, mit 13' bezeichnet ist. Die Düsen 16 sprühen eine Waschflüssigkeit nahezu allseitig auf die Wischerleiste 13' und die Abflüssigkeit verläßt den Waschkasten durch die Bodenöffnung 17. Sobald nun auf dem Fließband eine Automobilkarosse ankommt, fährt der Roboterarm 12 die Wischerleiste 13 gegen die zu reinigende Scheibe, wobei sich die Wischerleiste 13 der Schrägstellung der Scheibe anpaßt, und zieht die Wischerleiste 13 erst kurz vor Erreichen der hinteren Scheibenbegrenzung wieder zurück, und zwar in die Position 12', 13', womit sich dann die Wischerleiste wiederum im Waschkasten 15 befindet und von dem an ihr anhaftenden Konservierungsmittel befreit wird. Es ist offensichtlich, daß dieser Vorgang leicht zu automatisieren und in den Fließband-Fertigungsvorgang integrierbar ist. Der Roboterarm 12 wird dabei durch auf die Automobilkarosse ansprechende Sensoren gesteuert, wobei die erwähnte Höhen- und Seitenverstellbarkeit

2

des Gehäuses 11 zur Anpassung an die jeweilige Karosse bzw. deren Scheibengröße und -form dient. Als Waschflüssigkeit dient vorzugsweise Heißwasser, das gegebenenfalls noch mit chemischen Reinigungsmitteln versetzt sein kann. Es hat sich gezeigt, daß dadurch, daß die Wischerleiste 13 nach jedem Überfahren einer durch Außenkonservierungsmittel, vorzugsweise Wachs, verschmutzten Karossenscheibe gereinigt wird, es nicht zu dem gefürchteten Verschmieren der Scheibe kommt, die Scheibe vielmehr derart durchsichtig wird, daß die Karosse gefahrlos von einem Fahrer rangiert werden kann.

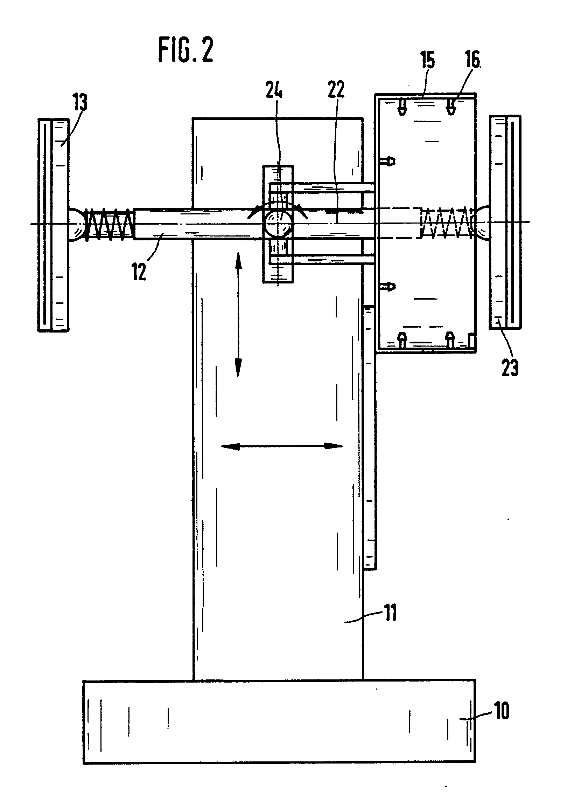

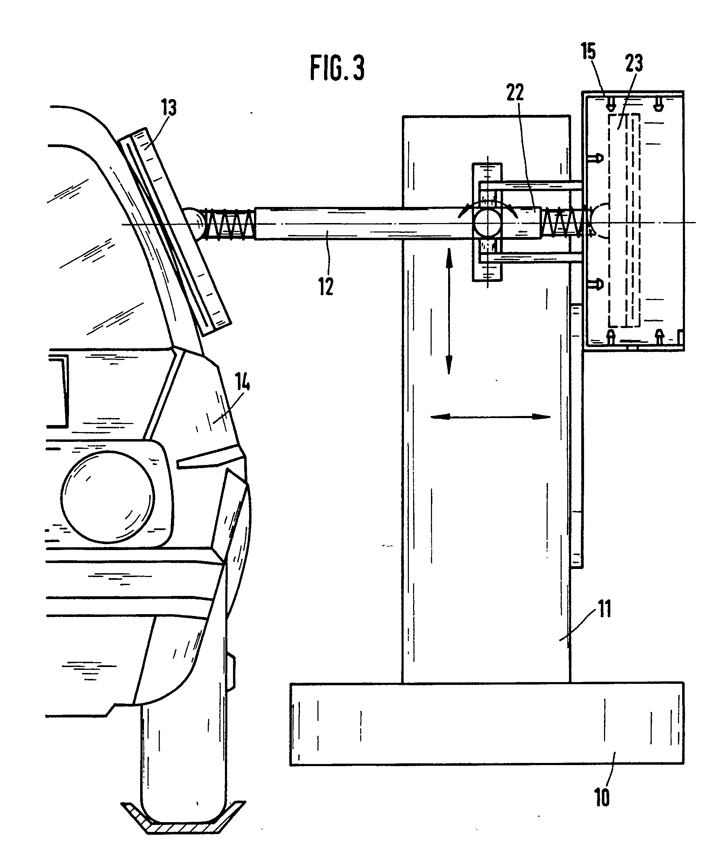

Die Fig. 2 und 3 zeigen eine Abwandlungsform der Vorrichtung. Dabei sind gleiche Bauteile mit denselben Bezugszeichen versehen. Im wesentlichen unterscheidet sich die Ausführungsform nach den Fig. 2 und 3 von derjenigen nach Fig. 1 dadurch, daß zwei Roboterarme 12 und 22 mit Wischerleisten 13 und 23 vorgesehen sind, die im Gegentakt arbeiten. Die beiden Roboterarme 12 und 22 sind dabei an einer horizontalen Drehachse 24 des Gehäuses 11 um 180° verschwenkbar gelagert. Fig. 2 zeigt die Ausgangsposition. Dabei weist der eine Roboterarm 12 mit Wischerleiste 13 nach vorne (auf der Zeichnung nach links), der Roboterarm 22 mit Wischerleiste 23 nach hinten, auf der Zeichnung nach rechts, wobei beide Roboterarme 12 und 22 sich in ihrer ausgefahrenen Teleskopstellung befinden, derart, daß die Wischerleiste 23 vor dem an der Rückseite des Gehäuses 11 befindlichen Waschkasten 15 steht. Fig. 3 zeigt nun die Arbeitsposition. Dabei ist der Roboterarm 12 nach links verfahren, derart, daß seine Wischerleiste 13 an der zu reinigenden Scheibe der Karosse 14 anliegt, wohingegen der Roboterarm 22 teleskopmäßig eingezogen ist, so daß seine Wischerleiste 23 sich innerhalb des Waschkastens 15 befindet und dort gereinigt wird. Unmittelbar vor Erreichen der hinteren Begrenzung der zu reinigenden Scheibe fährt dann der Roboterarm 12 zurück, und zwar in die in Fig. 2 gezeigte Position, und schwenkt dann um 180° um die Drehachse 24, derart, daß nunmehr die Wischerleiste 13 in die Position vor dem Waschkasten 15 gelangt, welche in Fig. 2 die Wischerleiste 23 eingenommen hat. Zugleich aber verlängert sich der Roboterarm 22 teleskopisch und schwenkt dann, wenn seine Wischerleiste 23 aus dem Waschkasten 15 ausgetreten ist, um 180°, womit dann die Wischerleiste 23 die Position der Wischerleiste 13 von Fig. 2 einnimmt. Die Schwenkbewegungen der beiden Roboterarme 12 und 22 erfolgen gleichzeitig, wobei es sich bei den Verschwenkungen von Waschkasten-Position zu Waschkasten-Position um zwei entgegengerichtete Schwenkungen von 180° oder um eine Schwenkung um 360° handeln kann. Der Vorteil der Vorrichtung nach den Fig. 2 und 3 gegenüber der Vorrichtung von Fig. 1 besteht darin, daß der Arbeitstakt wesentlich verkürzt ist. Die Taktsteuerung erfolgt ebenfalls durch auf die Automobilkarosse ansprechende Sensoren.

Selbstverständlich kann die Erfindung gegenüber den dargestellten Ausführungsformen zahlreiche Abwandlungen erfahren. So wäre eine noch höhere Taktgeschwindigkeit dadurch zu erreichen, daß vier Roboterarme mit Wischerleisten in Kreuzform vorgesehen sind, wobei sich dann zu jedem Zeitpunkt eine Wischerleiste in Arbeitsposition, eine Wischerleiste in Waschposition und zwei Wischerleisten in Zwischenpositionen befinden. Weiterhin besteht die Möglichkeit, die Wischerleiste horizontal zu stellen und mittels des Roboterarms von unten nach oben bzw. von oben nach unten über die zu reinigende Karossenscheibe zu führen. Freilich müssen dann die Roboterarme zusätzlich zur Hin- und Herbewegung eine Auf- und Abbewegung durchführen, und das Gehäuse muß mit der Karosse ein Stück mitbewegt werden. Für die Reinigung der Front- und Heckscheiben müssen die Roboterarme so gestaltet werden, daß die Wischerleisten die Scheiben von unten nach oben bzw. von oben nach unten überfahren und darüber hinaus der Bewegung der Karosse Rechnung getragen wird. Sollen alle vier Seitenscheiben sowie Front- und Heckscheibe zugleich gereinigt werden, dann kann dies durch Vorsehen einer entsprechenden Anzahl von Vorrichtungen erreicht werden. Wesentlich ist jedoch auf jeden Fall, daß die Wischerleisten nach Überfahren einer Scheibe sofort wieder von dem Konservierungsmittel befreit werden, weil nur dann die gewünschte Reinigung der Karossenscheibe gewährleistet ist.

**Patentansprüche**

1. Vorrichtung zum automatischen Reinigen der Scheiben von Automobil-Neukarossen (14), die für den temporären Transportschutz auf einem Fließband vorzugsweise elektrostatisch mit einem Außen-Konservierungsmittel, insbesondere einem wäßrigen Konservierungswachs, beschichtet sind, gekennzeichnet durch einen zumindest in einer zur Karossenbewegung senkrechten Richtung steuerbar beweglichen Roboterarm (12 ; 22), eine Wischerleiste (13 ; 23), deren Länge der Höhe oder Länge einer Karossenscheibe im wesentlichen gleich ist, und einen Waschkasten (15), dessen Langseite die Länge der Wischerleiste übertrifft und der Waschflüssigkeitsanschlüsse (16) und an seiner Unterseite einen Waschflüssigkeitsauslaß (17) aufweist, wobei die Wischerleiste (13 ; 23) durch den Roboterarm (12 ; 22) zwischen einer Position im Waschkasten (15) und einer Position an der Karossenscheibe verfahrbar und/oder verschwenkbar ist.

2. Vorrichtung nach Anspruch 1, dadurch gekennzeichnet, daß der Roboterarm (12 ; 22) als Teleskoparm

3

ausgebildet ist.

3. Vorrichtung nach Anspruch 1 oder 2, dadurch gekennzeichnet, daß der Roboterarm (22) um 180° um eine Schwenkachse (24) zwischen einer Arbeitsposition und einer Waschposition verschwenkbar ist.

4. Vorrichtung nach Anspruch 3, dadurch gekennzeichnet, daß zwei Roboterarme (12, 22) mit jeweils einer Waschleiste (13, 23) vorgesehen sind, die, bezogen auf die Schwenkachse (24) diametral zueinander verlaufen.

5. Vorrichtung nach Anspruch 4, dadurch gekennzeichnet, daß zwei weitere Roboterarme mit jeweils einer Waschleiste vorgesehen sind, die, bezogen auf die Schwenkachse (24) zueinander diametral und zu den beiden ersten Roboterarmen (12, 22) senkrecht verlaufen.

6. Vorrichtung nach einem der Ansprüche 1 bis 5, dadurch gekennzeichnet, daß der Waschkasten (15) im wesentlichen über seine gesamte Innenfläche verteilt Waschdüsen (16) aufweist.

7. Vorrichtung nach einem der Ansprüche 1 bis 5, dadurch gekennzeichnet, daß die Waschdüsen (16) mit Heißwasser gespeist sind, dem gegebenenfalls ein chemisches Lösungsmittel zugesetzt ist.

## Claims

1. Device for automatically cleaning the windows of new car bodies (14), which windows have been coated on their exterior surfaces, preferably in an electrostatic manner, with a compound of external preservation, especially with an aqueous preservative wax, in order to protect them temporarily during their transport on a band conveyor, characterized by a robot arm (12 ; 22) which is controllably movable at least in one direction perpendicular to the car body movement ; a wiper strip (13 ; 23) having a length generally equal to the height or the length of a car body window, and a washing box (15) of which the long side reaches beyond the length of the wiper strip and which is provided with inlets (16) for a washing liquid and, in its underside, an outlet (17) for the washing liquid, whereby the wiper strip (13 ; 23) is movable and/or swivellable by the robot arm (12 ; 22) between a position inside the washing box (15) and a position on the car body window.

2. Device according to claim 1, characterized in that the robot arm (12 ; 22) is designed as a telescoping arm.

3. Device according to claim 1 or 2, characterized in that the robot arm (22) is rotatable on a rotation axis (24) by 180° between a working position and a washing position.

4. Device according to claim 3, characterized by the provision of two robot arms (12, 22) each having a washing strip (13, 23), said robot arms being mutually aligned diametrically in respect of the axis of rotation (24).

5. Device according to claim 4, characterized by the provision of two further robot arms each having a washing strip, said robot arms being aligned diametrically in respect of the axis of rotation (24), when considered in their relationship one to the other, and in a perpendicular direction in respect of the first two robot arms (12, 22).

6. Device according to any of claims 1 to 5, characterized in that the washing box (15) has washing spray nozzles (16) generally distributed over its entire internal surface.

7. Device according to any of claims 1 to 5, characterized in that the washing spray nozzles (16) are fed with hot water, added with a chemical solvent, if necessary.

## Revendications

1. Dispositif pour le nettoyage automatique des vitres de carrosseries neuves (14) d'automobiles, carrosseries recouvertes, de préférence par voie électrostatique, d'un agent de conservation extérieur, plus particulièrement d'une cire de conservation acqueuse, en vue de les protéger temporairement pendant leur transport sur un tapis roulant, dispositif caractérisé par, au moins, un bras de robot (12 ; 22) animé de mouvements commandés au moins dans une direction perpendiculaire au mouvement de la carrosserie, une raclette d'essuyage (13 ; 23) dont la longueur est sensiblement égale à la hauteur ou à la longueur d'un vitre monté dans la carrosserie, et par une boîte de lavage (15) dont le côté longitudinal dépasse la longueur de la raclette d'essuyage et qui comporte des raccords (16) pour un fluide de lavage et une sortie (17) pour le fluide de lavage, installée dans sa surface inférieure, ladite raclette d'essuyage (13 ; 23) étant capable d'être mue et/ou tournée par le bras de robot (12 ; 22) entre une position à l'intérieur de la boîte de lavage (15) et une position en contact avec le vitre de la carrosserie.

2. Dispositif selon la revendication 1, caractérisé en ce que le bras de robot (12 ; 22) est réalisé sous la forme d'un bras téléscopique.

3. Dispositif selon la revendication 1 ou 2, caractérisé en ce que le bras de robot (22) est capable d'être tourné de 180 degrés, autour d'un axe de rotation (24), entre une position de travail et une position de lavage.

4. Dispositif selon la revendication 3, caractérisé en ce que l'on a prévu deux bras de robot (12, 22), chacun comportant une raclette de lavage (13, 23), lesdits bras de robot étant mutuellement alignés dans une orientation diamétrale, par rapport à l'axe de rotation (24).

5. Dispositif selon la revendication 4, caractérisé en ce que l'on a prévu deux autres bras de robot, chacun comportant une raclette de lavage, lesdits bras de robot étant mutuellement alignés dans une orientation diamétrale, par rapport à l'axe de rotation (24), et dans une position perpendiculaire, par rapport aux premiers deux bras de robot (12, 22).

6. Dispositif selon l'une quelconque des revendications 1 à 5, caractérisé en ce que la boîte de lavage (15) comporte des pulvérisateurs de lavage (16) répartis sensiblement sur l'ensemble de sa surface intérieure.

7. Dispositif selon l'une quelconque des revendications 1 à 5, caractérisé en ce que les pulvérisateurs de lavage (16) sont alimentés en eau chaude à laquelle est ajouté, le cas échéant, un solvant chimique.

FIG.1

# FIG. 2

# FIG.3